# EUROPEAN PATENT APPLICATION

(11) **EP 4 760 563 A1**
(43) Date of publication of application: **17.06.2026**
(21) Application number: 25216380.3
(22) Date of filing: 17.11.2025
(51) Int. Cl.: G06F 21/55, G06F 21/56, G06N 20/00, G06F 18/24

(54) **A MALWARE PROCESS DETECTION TECHNIQUE**

(30) Priority: 09.12.2024 US 202418973523
(71) Applicant: Cylance Inc., Plano, TX 75024 (US)
(72) Inventor: SIRCAR, Shiladitya, Waterloo, N2K 0A7 (CA); MELGAREJO LERMAS, Irene, Waterloo, N2K 0A7 (CA)
(74) Representative: Murgitroyd & Company

(57) **Abstract**

It is proposed a method comprising obtaining, for identified processes from raw data, a list of activities and a list of used resources related to an execution of identified processes; generating, for each of the identified processes, a graph representation, wherein the graph representation comprises nodes and edges, wherein the nodes are assigned with elements from the list of used resources or an identifying value of one of the two identified processes, and wherein the edges are assigned with elements from the list of activities; combining the generated graph representations of the identified processes when the identified processes are linked together, wherein the combining outputting a combined graph representation being a representation of one of the events to be classified; providing the representation of one of the events to be classified to a classification model.

## Description

### TECHNICAL FIELD

The present disclosure relates to the detection of malwares running or having been executed on a device.

### BACKGROUND

In the field of cybersecurity, a malware is an active, running instance of malicious software/program within a computer's operating system. Malwares are specifically designed to perform harmful actions, such as stealing data, disrupting system operations, or giving unauthorized access to an attacker. Usually, these malwares operate in the background and can mimic legitimate system processes to evade detection.

Hence, there is a need to develop techniques for detecting that a malware has been executed on a device (either to inform a user that the device has been compromised, or to report data to train a machine learning model dedicated to the detection of malwares).

The proposed technique in this document can be used for this purpose.

### SUMMARY

Accordingly there is provided a method, a computer program, and a system as detailed in the claims that follow.

### DESCRIPTION OF DRAWINGS

FIG. 1 is a flowchart showing an example operation for classifying an event associated with at least one process executed on a device, according to an implementation.
FIG. 2 is a flowchart presenting an example method for training a machine learning model to be used as a malware classification model or as a malware identification model.
FIG. 3 depicts a schematic diagram showing an example system that provides an event classification technique according to an implementation.
FIG. 4 illustrates a high-level architecture block diagram of a computer according to an implementation.

Like reference numbers and designations in the various drawings indicate like elements.

### DETAILED DESCRIPTION

A malware can often be viewed as a sequence of processes. Indeed, many malware programs operate through a series of processes to achieve their objectives. This sequence can include multiple processes that either run consecutively or in parallel to evade detection, establish control, or carry out a specific payload. Hence, a malware can generate a sequence of processes. In one embodiment of the disclosure, the lineage or ancestry of processes is going to be used in tree form (with nodes and edges) in order to detect a malware. For reminders, a process is an instance of a program that is being executed by a computer's operating system. Each process has its own allocated memory and resources, and it operates independently of other processes (however these processes can communicate to each other's via Inter-Process Communication (IPC) mechanisms, and they can also share resources/artifacts such as network resource they connect or registry key they modify). A process includes the program's executable code, as well as other elements like a memory address space (i.e. the specific memory assigned to the process for its data and code), an execution context (which includes the process state (running, waiting, etc.), CPU registers, and program counter), resources (access to input/output files, devices, and any network connections the process might need) and a process ID (PID, which is a unique identifier assigned by the operating system).

Many types of malware begin as a single "dropper" process. This process is responsible for downloading or unpacking additional malicious components, such as other malware files or modules. Therefore this dropper process may generate new processes to extract or execute the main payload (the core malicious code that carries out the intended harm) as explained in the following.

Indeed, the initial malware process often launches a sequence of operations to gather information about the environment, such as the OS type, security software, and user permissions. If needed, the malware may execute processes to gain higher privileges to execute sensitive or restricted actions.

After gaining a foothold, the malware may spawn additional processes to download the main payload. These processes might include launching separate threads to run background tasks or manage communications with remote servers.

To ensure that the malware continues running even after reboots or shutdowns, it often sets up a persistence mechanism. This might include modifying system registry keys, creating scheduled tasks, or installing hidden services, all of which may appear as distinct processes.

Then, in a malicious activity execution stage, the malware actively performs its malicious tasks, such as data exfiltration, keylogging, or spreading across a network. Each of these activities could run in its own process, either in parallel or sequentially, depending on the malware's design.

Hence, one process associated with a malware may handle data exfiltration, another process associated with the same malware may handle keylogging, and yet another process associated with the same malware may communicate with a command-and-control (C&C) server. Some malwares (such as ransomware) can also launch encryption processes that scan and encrypt files across a system.

Some advanced malwares include processes for self-destruction or cleanup once their tasks are complete, leaving little to no trace on the infected system.

However, whatever the operations and sequence of actions carried out by different processes associated with a malware, the information relating to them can be recorded.

Indeed, several techniques are commonly used to capture detailed information about malware execution. For example, system event logs can be used to collect these information. In addition, process monitoring and tracing tools can list all running processes, including their memory usage, command line arguments, and network connections. Moreover, network traffic monitoring tools such as packet capture tools or firewall and intrusion detection/prevention logs can capture communications between processes associated with a malware and external servers. Other techniques related to API Monitoring (that can record calls to Windows APIs), or use of hooking techniques (that can capture low-level interactions) can also be used. At last, registry trackers can also be used to capture registry changes in Windows, logging modifications or additions that malware might make for persistence or obfuscation. In the following, the wording "raw data" is going to be used to cover the information/data captured according to these techniques.

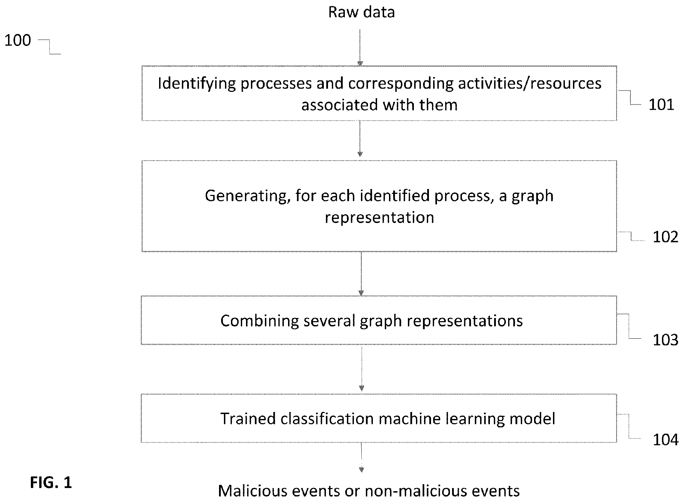

FIG. 1 is a flowchart showing an example operation 100 for classifying an event associated with at least one process executed on a device, according to an implementation. The example operation 100 shown in FIG. 1 can be implemented using additional, fewer, or different operations, which can be performed in the order shown or in a different order.

In the following, the wording "event" is used to define the set/sequence of actions performed by one or several processes on different resources that can be related to the execution of a program (malicious or not). Hence, the execution of a malware (as described previously) can be viewed as a malware event or a malicious event. Therefore, in a sense, an event can be associated with one or several processes.

According to one implementation, in an identifying step 101, a device identifies one or several processes in the raw data (at least by the process information such as a name, ID, command line or parent process) and gets a list of activities and a list of used resources related to an execution of these identified processes. The raw data is associated with a time range during which the data from the use of various capture techniques were collected. The time range can be a range of several minutes (from 10 to 60 minutes for example), or a range of several hours (from one to twenty-four hours), and the process described in connection with the FIG. 1 can be repeated with a new set of raw data collected during another following time range, with the same duration. The length of the time range is a parameter that can be configured according to one embodiment of the disclosure. It should be noted that depending on the length of the time range, the trained machine learning models should have been trained on the same time length periods/ranges. In a variant, only processes that have been completed are selected/chosen to be represented as graph representations in a following step.

Indeed, in a generating step 102, each identified process (or selected/chosen process) is represented in the form of a graph representation. The graph representation of a process comprises nodes and edges: the nodes are assigned with elements from the list of used resources of the process and/or an identifying value of an identified process (such as a name or an ID which can be a unique numerical identifier assigned by an operating system to a process when it is created), and the edges are assigned with elements from the list of activities. The used resources can be related to memory space, files, hardware resources (processor, sensors, battery, components related to network connectivity, GPS, camera, etc. ), IP addresses, ports, protocols, applications, system services. The activities are related to actions performed on the resources by a process such as allocating or deallocating memory, reading or writing data in a memory, creating or deleting files (such as system configuration registers) or directories, establishing a network connection (i.e. the resource can be a network interface card), sending or receiving data packets, listening for incoming connection, etc.

Therefore, the nodes and edges comprise non-numerical values (such as categorical labels or textual information). For example, an edge can comprise numerical values such as an amount of CPU or memory consumed by the execution of the considered action.

In a combining step 103, when processes are related to each other, the graph representations of these related processes are combined. For example, the combination can comprise the connecting of nodes of different graph representations of processes (such as the connecting of nodes comprising the identifying values of these processes). In the case where two graph representations of processes are combined, a value of 2 is assigned to a depth value. Thus, the depth value is a parameter that characterizes the number of processes linked together, making it possible to preserve the relationship (and the scheduling) of these processes represented in the form of graphs. In one implementation, the depth value is comprised between 2 and 10. Related processes can be due to the existence of Inter-Process Communication (IPC), or due to a parent-child relationship. Hence, a combined graph representation of processes can be viewed as a representation of an event, and the combined graph representation keeps track of the lineage of processes. The combining can be done by analyzing specific information in the logs or traces that indicate process hierarchies, such as Process ID, parent process ID (PPID), timestamp, User ID (UID) or Session ID, event type (as some logs differentiate between diverse types of events, like process start, stop, or fork). It should be noted that some nodes (corresponding to resources) can be merged (during the generation of a combined graph representation) if they correspond to the same resource, but the edges are preserved. In addition, the detection of command-line instructions in the raw data or the detection of fork system calls in the raw data or the detection of Inter-process communication (IPC) mechanisms in the raw data can enable the establishment of a hierarchy or a relationship between the processes, that can be reflected in the combined graph representation by linking or connecting graph representations of related processes. Then, the edges that connect different graph representations comprise information establishing or explaining the relationship between the connected processes. For example, in one embodiment of the disclosure the edge linking two graph representations of related processes can comprise a vector representation of a command-line instruction from the use of an embedding technique similar to Word2Vec but specifically designed for processing command-line instructions. For example, this embedding technique can rely on the use of a Skip-gram or Continuous Bag of Words (CBOW) model to predict context commands for a given command, capturing relationships between different commands.

In a step 104, the one or several combined graph representations of processes are provided as input to a trained classification model.

In one implementation, the nodes and edges that comprise text (e.g., tags, labels) are converted by text embeddings techniques such as Word2Vec, GloVe, or transformer-based embeddings (e.g., BERT) into numerical vectors. Hence, each node or edge can be associated with a numerical value/vector.

In one embodiment of the disclosure, a device can perform a vectorization step that converts each of the one or several combined graph representations of processes into a vector. The vectorization step can be done in order to prepare the data to be processed by the trained classification model. In a variant, this step is a part of the trained classification model: the trained classification model takes as input graph data such as the combined graph representations, and the vectorization is part of the model itself.

According to one implementation, the vectorization step comprises the use of graph embedding techniques to convert the numerical values associated with nodes and edges into a vector with a fixed-length (i.e. each combined graph representation of processes is converted into a fixed-length vector, whatever the size or depth of the combined graph representation is).

In a variant, the vectorization step can rely on a trained model that uses a Graph Neural Network (GNN) such as a Graph Attention Network (GAT) or a Relational Graph Convolutional Networks (R-GCN), or a Message Passing Neural Network (MPNN) which are designed to handle both node embeddings and edge embeddings. Indeed, in these architecture, edge embeddings and node embeddings can be processed together. For example, by concatenating or aggregating the edge embeddings and node embeddings based on their position in the combined graph representation. Then, a pooling function or a readout function can be used in order to obtain a fixed-length vector of a combined graph representation.

In a variant, graph embedding techniques can be combined with the use of random projections (which is a dimensionality reduction technique where the high-dimensional vectors (obtained from the processing of the combined graph representation of processes) are projected onto a lower-dimensional subspace using a random matrix). It should be noted that the use of random projections can be done on the node embeddings themselves before executing pooling methods. Hence, the pooling methods are performed on the reduced node/edge embeddings according to this embodiment. In a variant, the use of random projections can be done on the vectors resulting from the execution of pooling methods on the node/edge embeddings. Whatever the approach chosen, we can say in a sense that we can obtain a set of reduced vectors according to these approaches (the reduction resulting from the use of random projections).

Therefore, from a set of combined graph representation of processes, a set of vectors is obtained, each vector having a same length/size.

In a variant, the vectorization step can rely on the use of a trained graph autoencoder (GAE). Indeed, a trained graph autoencoder comprises an encoder that maps a combined graph representation to a latent space, and the trained graph autoencoder also comprises a decoder that reconstructs the combined graph representation from this latent representation. However, in the vectorization step, only the encoder from the trained graph autoencoder is used. Hence, from a set of combined graph representation of processes, a set of vectors (outputted by the encoder of a trained graph autoencoder) is obtained.

In a variant, clustering techniques can be applied on the set of vectors obtained from a vectorization step. Then, the cluster centroids of the obtained clusters are used as inputs to a trained classification model. By doing so, we can reduce the number of vectors to be classified. The clustering techniques can also be applied on a set of reduced vectors in the case of use of dimensionality reduction techniques. Indeed, in one implementation, dimensionality reduction techniques like Principal Component Analysis (PCA) can be used in order to get a set of reduced vectors to be classified from the set of vectors. In another implementation, other dimensionality reduction methods, such as t-SNE (t-distributed Stochastic Neighbor Embedding) or UMAP (Uniform Manifold Approximation and Projection), can be used in order to get a set of reduced vectors from the set of vectors.

In a variant, a clustering technique can be used to detect outlier vectors. In such embodiment, only outlier vectors are provided to a trained classification model.

In one implementation, a clustering technique such as the K-means clustering can be used.

In a variant, a clustering technique such as Density-Based Spatial Clustering of Applications with Noise (DBSCAN) can be used. However, it should be noted that the DBSCAN technique is usually more suited for clustering data when clusters have a similar density. Therefore, a selecting step can be executed in order to choose amongst the possible clustering techniques which one to use.

In one embodiment of the disclosure, a trained classification model is able to detect or identify malicious events from the provided data related to combined graph representations.

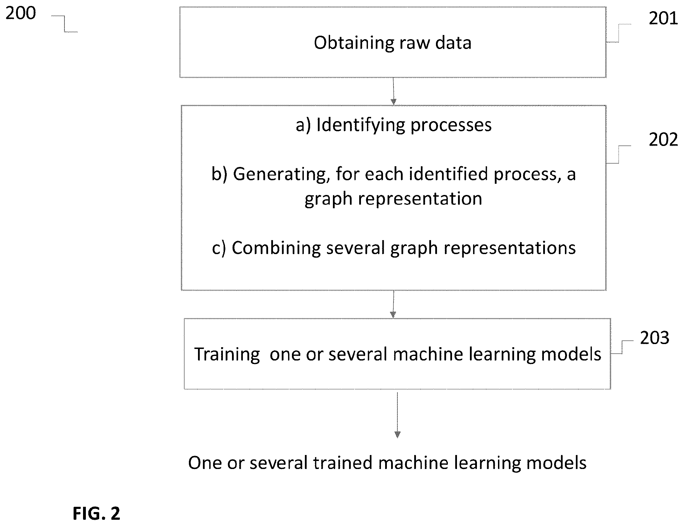

According to one implementation, FIG. 2 is a flowchart presenting an example method for training a machine learning model to be used as a malware classification model or as a malware identification model.

It is commonly known that machine learning models are trained using a process that involves feeding them large amounts of data and allowing them to learn patterns and relationships within that data.

In one implementation, a method for training a machine learning model is proposed. In the following, the machine learning model is a malware classification model or a malware identification model, but the operations and processing used in order to train this machine learning model can be applied to other types of machine learning models depending of the type of data used as inputs.

According to one embodiment of the disclosure, a device obtains in a step 201 raw data. As explained previously, raw data covers a lot of types of information/data coming from different monitoring tools. In one implementation, a time slot or period is associated with the raw data (meaning that the raw data has been monitored during this time slot or period). For the training of a machine learning model, a sequence of raw data or historical raw data (from oldest to newest) is used, in which each raw data can be viewed as a data block (with collected data in the form of files for example) being associated with a time slot or period.

According to one implementation, the raw data has been collected from a "safe" device in the sense that no malware program has been executed on this device. Hence, a machine learning model is going to be trained with "safe" data (i.e. without malware events). Therefore, the trained machine learning model is going to be able to detect anomalies (i.e. events that perform actions on resources that are unusual; these unusual events are potentially malware events, and the trained machine learning model is going to highlight this aspects in an output value/score/label). According to this embodiment, the trained machine learning model relies on a One-Class SVM (Support Vector Machine) architecture or an autoencoder architecture.

According to another implementation, the raw data has been collected from an "infected" device in the sense that it is known that one or several malware programs have been executed on this device. Unlike the previous embodiment, it is possible to train a machine learning model on malware events, and therefore it is possible that such trained machine learning model identifies a malware event as such.

Then, in a step 202, similar steps as the ones performed in steps 101, 102 and 103 are performed in order to generate combined graph representations of related processes that have been executed on a monitored device. As in these steps, a set of vectors can be obtained/determined by using graph embedding techniques. In one implementation, a label that indicates the state of the device, from which the raw data comes from, is associated with the combined graph representations.

Once the step 202 is done, a data splitting process can be executed in order to divide a given dataset of vectors/file embedding vectors into a training set and a testing set. The training set is used to train the model, while the testing set is used to evaluate its performance.

According to one embodiment of the disclosure, different model can be chosen to be trained. Indeed, depending on the nature of the data obtained (i.e. either graph data or a set of vectors), different architectures can be used. For example, a feedforward neural network (FNN), also called a multi-layer perceptron (MLP), can be used if a set of vectors is used as inputs. In a variant, a Convolutional Neural Networks (CNNs) can be chosen to be trained. In another variant, Recurrent Neural Networks (RNNs) or Long Short-Term Memory (LSTM) Networks can be chosen. Moreover, other architectures relying on the use of transformers or hybrid approaches relying on the use of an MLP combined with autoencoders can be chosen. The way in which the parameters and hyperparameters of each model are chosen is not described in the present document. But one skilled in the art would understand that based on the results of the training of these models, modification of these parameters and hyperparameters is done to obtain better results. Indeed, in order to determine these parameters and hyperparameters, comparison of results has to be done. Factors such as the number of layers, the number of neurons per layer, the activation functions, and the optimization algorithm has an important impact on the behavior of a model. This is the purpose of fine tuning which is beyond the scope of the present document.

Once a model architecture is chosen, the model training 203 is performed by using the training dataset, the use of a loss function that measures the discrepancy between the model's predictions and the true values, and the use of an optimization algorithm (e.g., gradient descent) to update the parameters (weights) iteratively to minimize the loss function. Indeed, during the model training, the internal parameters (weights and biases) are modified in order to minimize the difference between the predictions of the model and the actual values in the training data.

The model training 203 further comprises an evaluation step that evaluate the trained model on the testing dataset to assess its performance. Based on the results, either model refinement can be done (i.e. such as the adjustment of the hyperparameters of the model) or the training process can stop at this stage if the performance metrics fulfill a stopping criteria.

In a variant, a contrastive loss function is used to train a machine learning model. In this embodiment, data from the training set is used to get a positive pairs set and a negative pairs set: the positive pairs set comprising a collection of pairs of vectors/combined graph representations that are similar, and the negative pairs set comprising a collection of pairs of vectors/combined graph representations that are dissimilar. The similarity between combined graph representations can be determined by using the graph edit distance for example. Then, the device uses these two sets to train a machine learning model (such as a graph neural network). At this end of this training process, the trained machine learning model is able to classify a combined graph representation into a class defined by similar representations, also associated with a label such as "malware" or "non-malware".

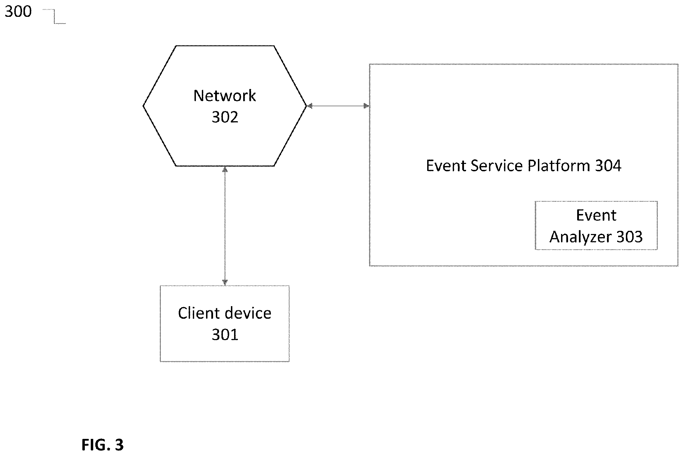

In one embodiment, once a trained machine learning model is obtained/generated, it can be deployed to an event service platform described in FIG. 3.

The training process and deployment of a trained machine learning model can be reiterated regularly based on parameters of a security policy, the parameters defining for example a time range or frequency at which to carry out the training. In other case, a security alarm can be the event that trigger the launch of a new training of the one or several models.

In a variant, several machine learning models are trained.

FIG. 3 depicts a schematic diagram showing an example system that provides an event classification technique according to an implementation. More precisely, the system 300 includes an event service platform 304 that is communicatively coupled with a client device 301 over a network 302. The client device 301 represents an electronic device that provides raw data to be analyzed or combined graph representations or similar data. In some cases, the client device 301 can send a file comprising these data to the event service platform 304 for a malware detection analysis. In some cases, the event service platform 304 sends the output of the malware detection analysis to the client device 301 for remediation actions.

The event service platform 304 represents an application, a set of applications, software, software modules, hardware, or any combination thereof, that detects malware events. The event service platform 304 can be an application server, a service provider, or any other network entity. The event service platform 304 can be implemented using one or more computers, computer servers, or a cloud-computing platform. The event service platform 304 can be used to run trained machine learning models that are used in a malware detection event. In a variant, the event service platform 304 can also perform the training process discussed in FIG. 2 and associated descriptions. The event service platform 304 includes an event analyzer 303. The event analyzer 303 represents an application, a set of applications, software, software modules, hardware, or any combination thereof, that performs data preprocessing on a received file. In some implementations, the event analyzer 303 can generate embedding vectors or perform vectorization. FIGS. 1-2 and associated descriptions provide additional details of these implementations. In a variant, both the event analyzer 303 and the event service platform 304 are executed in the client device 301 itself. Indeed, more and more client devices, thanks to technological developments, are capable of running trained machine learning models locally. For example, iPhones that can be viewed as client devices are suitable for running machine learning models locally as they provide a core machine learning framework, a dedicated chip component such as the Apple neural engine (ANE) optimized for performing machine learning tasks.

Turning to a general description, the client device 301 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 300 includes the network 302. The network 302 represents an application, set of applications, software, software modules, hardware, or combination thereof, that can be configured to transmit data messages between the entities in the example system 300. The network 302 can include a wireless network, a wireline network, the Internet, or a combination thereof. For example, the network 302 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 3 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

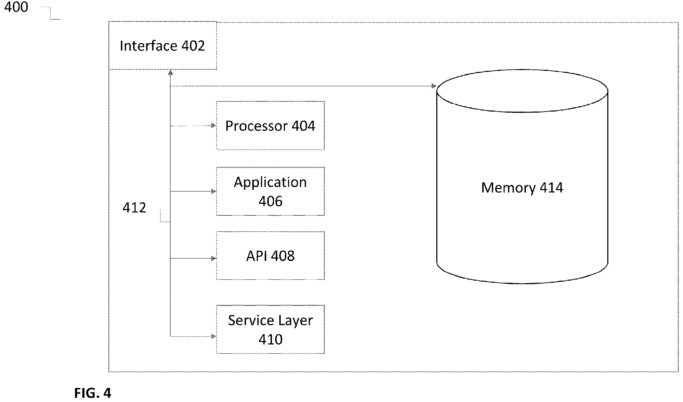

FIG. 4 illustrates a high-level architecture block diagram of a computer400 according to an implementation. The computer 400 can be implemented as the client device 301, the event service platform 304, or any combinations thereof. The computer 400 can also be used to implement the operations discussed in FIGS. 1-2. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the steps of FIGS. 1-2 can be implemented in an executable computing code, e.g., C/C++ executable codes. In some cases, the computer 400 can include a standalone Linux system that runs batch applications. In some cases, the computer 400 can include mobile or personal computers.

The computer 400 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 400 can serve as a client, network component, a server, a database, or other persistency, and/or any other components. In some implementations, one or more components of the computer 400 may be configured to operate within a cloud-computing-based environment.

At a high level, the computer 400 is an electronic computing device operable to receive, transmit, process, store, or manage data. According to some implementations, the computer 400 can also include or be communicably coupled with an application server, e-mail server, web server, caching server, streaming data server, business intelligence (BI) server, and/or other server.

The computer 400 can collect data of network events or mobile application usage events over network 302 from a web browser or a client application, e.g., an installed plugin. In addition, data can be collected by the computer 400 from internal users (e.g., from a command console or by another appropriate access method), external or third parties, other automated applications, as well as any other appropriate entities, individuals, systems, or computers.

Each of the components of the computer 400 can communicate using a system bus 412. In some implementations, any and/or all the components of the computer 400, both hardware and/or software, may interface with each other and/or the interface 402 over the system bus 412 using an Application Programming Interface (API) 408 and/or a service layer 410. The API 408 may include specifications for routines, data structures, and object classes. The API 408 may be either computer language-independent or -dependent and refer to a complete interface, a single function, or even a set of APIs. The service layer 410 provides software services to the computer 400. The functionality of the computer 400 may be accessible for all service consumers using this service layer. Software services, such as those provided by the service layer 410, provide reusable, defined business functionalities through a defined interface. For example, the interface may be software written in JAVA, C++, or other suitable languages providing data in Extensible Markup Language (XML) format or other suitable format. While illustrated as an integrated component of the computer 400, alternative implementations may illustrate the API 408 and/or the service layer 410 as stand-alone components in relation to other components of the computer 400. Moreover, any or all parts of the API 408 and/or the service layer 410 may be implemented as child or sub-modules of another software module, enterprise application, or hardware module without departing from the scope of this disclosure.

The computer 400 includes an interface 402. Although illustrated as a single interface 402 in FIG. 4, two or more interfaces 402 may be used according to particular needs, desires, or particular implementations of the computer 400. The interface 402 is used by the computer 400 for communicating with other systems in a distributed environment connected to a network (whether illustrated or not). Generally, the interface 402 comprises logic encoded in software and/or hardware in a suitable combination and operable to communicate with the network. More specifically, the interface 402 may comprise software supporting one or more communication protocols associated with communications such that the network or interface's hardware is operable to communicate physical signals within and outside of the computer 400.

The computer 400 includes at least one processor 404. Although illustrated as a single processor 404 in FIG. 4, two or more processors may be used according to particular needs, desires, or particular implementations of the computer. Generally, the processor 404 executes instructions and manipulates data to perform the operations of the computer 400. Specifically, the processor 404 executes the functionality disclosed in FIGS. 1-2.

The computer 400 also includes a memory 414 that holds data for the computer 400. Although illustrated as a single memory 414 in FIG. 4, two or more memories may be used according to particular needs, desires, or particular implementations of the computer 400. While memory 414 is illustrated as an integral component of the computer 400, in alternative implementations, memory 414 can be external to the computer 400.

The application 406 is an algorithmic software engine providing functionality according to particular needs, desires, or particular implementations of the computer 400, particularly with respect to functionality required for anomaly detection. Although illustrated as a single application 406, the application 406 may be implemented as multiple applications 406 on the computer 400. In addition, although illustrated as integral to the computer 400, in alternative implementations, the application 406 can be external to the computer 400.

There may be any number of computers 400 associated with, or external to, and communicating over a network. Furthermore, this disclosure contemplates that many users may use one computer 400, or that one user may use multiple computers 400.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a standalone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Described implementations of the subject matter can include one or more features, alone or in combination.

For example, in an implementation, it is proposed a first feature that deals with a method for classifying events from a raw data associated with a device, an event being associated with at least two processes executed on the device, the event being either a malicious event or a non-malicious event, the method comprising:
- obtaining, for at least two identified processes in the raw data, a list of activities and a list of used resources related to an execution of each of the at least two identified processes;
- generating, for each of the at least two identified processes, a graph representation, wherein the graph representation comprises nodes and edges, wherein the nodes are assigned with elements from the list of used resources or an identifying value of one of the two identified processes, and wherein the edges are assigned with elements from the list of activities;
- combining the at least two generated graph representations of the at least two identified processes when the at least two identified processes are linked together, wherein the combining outputting a combined graph representation being a representation of one of the events to be classified;
- providing the representation of one of the events to be classified to at least one classification model ; and
in the case that one of the events is classified as a malicious event by the at least one classification model, generating an alarm.

A second feature, combinable with any of the previous or following features, relates to a method for classifying events, wherein the at least two identified processes are linked together based on a detection of command-line instructions in the raw data or by a detection of fork system calls in the raw data or by a detection of Inter-Process Communication (IPC) mechanisms in the raw data.

A third feature, combinable with any of the previous or following features, relates to a method for classifying events, wherein the at least one classification model is one of a graph convolutional network model or a graph attention network model.

A fourth feature, combinable with any of the previous or following features, relates to a method for classifying events, wherein it further comprises, when there are several combined graph representations, clustering the combined graph representations into clusters, and using a representative element of the cluster as another representation of the event to be classified by the at least one classification model or associating an information related to the cluster with the representation of the event to be classified by the at least one classification model, wherein the information being one of an information related to a cluster centroid, an information related to a cluster mean, an information related to a cluster membership probability and/or an information related to a cluster label.

A fifth feature, combinable with any of the previous or following features, relates to a method for classifying events, wherein the clustering further comprises obtaining combined graph representations; determining features from the combined graph representations; and determining the clusters based on a processing of the features.

A sixth feature, combinable with any of the previous or following features, relates to a method, wherein determining the clusters comprises using at least one of k-means, hierarchical clustering or DBSCAN.

A seventh feature, combinable with any of the previous or following features, relates to a method, wherein determining the features from the combined graph representations comprises determining graph embeddings of nodes and edges which are numerical values in a lower-dimensional space compared to original values.

An eighth feature, combinable with any of the previous or following features, relates to a method, wherein determining graph embeddings comprises using Node2Vec.

A ninth feature, combinable with any of the previous or following features, relates to a method, wherein determining features from the combined graph representations comprises determining adjacency matrices and/or attribute matrices.

A tenth feature, combinable with any of the previous or following features, relates to a method, wherein determining the clusters comprises determining common motifs in the combined graph representations and gathering the combined graph representations into clusters based on occurrences of determined common motifs, and wherein the common motifs comprise linear chains that represent sequential dependencies, fork-join that represent parallel execution of the corresponding processes, cycles that represent iterative or feedback loops, and diamond that represent conditional branching.

An eleventh feature, combinable with any of the previous or following features, relates to a method, wherein determining the clusters further comprises determining communities of nodes of combined graph representations based on their similarities or connections.

A twelfth feature, combinable with any of the previous or following features, relates to a method, wherein determining communities of nodes comprises merging nodes into communities based on modularity gain by the Louvain algorithm.

A thirteenth feature, combinable with any of the previous or following features, relates to a method, wherein the raw data comprises at least one of a system log, performance metrics, trace data, command histories and network traffic data.

A fourteenth feature, combinable with any of the previous or following features, relates to a method, wherein used resources are related to hardware resources and/or software resources of the device and/or other devices, and wherein activities are related to actions performed on the hardware resources and/or software resources.

A fifteenth feature, combinable with any of the previous or following features, relates to a method, wherein the elements assigned to the nodes and the edges that are categorical values or labels are converted into numerical representations by using at least one of the following techniques: one-hot encoding, label embedding or ordinal encoding.

A sixteenth feature, combinable with any of the previous or following features, relates to a method, wherein the raw data is associated with a time slot.

A seventeenth feature, combinable with any of the previous or following features, relates to a method, wherein all of the processes identified in the raw data are terminated.

An eighteenth feature, combinable with any of the previous or following features, relates to a method, wherein it further comprises labelling an event classified as a malicious by the at least one classification model.

A nineteenth feature, combinable with any of the previous or following features, relates to a method, wherein several classification models are used, and a majority vote is used to classify the event as a malicious event or a non-malicious event.

A twentieth feature, combinable with any of the previous or following features, relates to a method, wherein the combined graph representation has a depth equal to N, the depth being related to a number of identified processes in the raw data that are linked together, N being an integer greater or equal to two.

Accordingly, the previously described example implementations do not define or constrain the present disclosure. Other changes, substitutions, and alterations are also possible without departing from the scope of the present disclosure.

In a variant, features previously mentioned can be implemented either in hardware or as a computer program.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

At last, according to an embodiment, some machine learning models can be run on Central Processing Unit (CPU) that are general-purpose processors that handle most types of computing tasks. In a variant, Graphics Processing Unit (GPU) which are specialized hardware designed for parallel computing can be used to run or train machine learning models mentioned in this document. Moreover, in a variant, Tensor Processing Unit (TPU) can be used. Therefore a device that comprises at least one of these different processors can execute part of the processes that involve the use of machine learning models .

## Claims

1. A computer-implemented method for classifying events from a raw data associated with a device, an event being associated with at least two processes executed on the device, the event being either a malicious event or a non-malicious event, the method comprising:
obtaining, for at least two identified processes in the raw data, a list of activities and a list of used resources related to an execution of each of the at least two identified processes;
generating, for each of the at least two identified processes, a graph representation, wherein the graph representation comprises nodes and edges, wherein the nodes are assigned with elements from the list of used resources or an identifying value of one of the two identified processes, and wherein the edges are assigned with elements from the list of activities;
combining the at least two generated graph representations of the at least two identified processes when the at least two identified processes are linked together, wherein the combining outputting a combined graph representation being a representation of one of the events to be classified;
providing the representation of one of the events to be classified to at least one classification model; and
in the case that one of the events is classified as a malicious event by the at least one classification model, generating an alarm.

2. The computer-implemented method of claim 1, wherein the at least two identified processes are linked together based on a detection of command-line instructions in the raw data or by a detection of fork system calls in the raw data or by a detection of Inter-Process Communication (IPC) mechanisms in the raw data.

3. The computer-implemented method of claim 1 or 2, wherein the at least one classification model is one of a graph convolutional network model or a graph attention network model.

4. The computer-implemented method of claim 1, further comprising, when there are several combined graph representations, clustering the combined graph representations into clusters, and using a representative element of the cluster as another representation of the event to be classified by the at least one classification model or associating an information related to the cluster with the representation of the event to be classified by the at least one classification model, wherein the information being one of an information related to a cluster centroid, an information related to a cluster mean, an information related to a cluster membership probability and/or an information related to a cluster label.

5. The computer-implemented method of claim 4, wherein the clustering further comprises obtaining combined graph representations; determining features from the combined graph representations; and determining the clusters based on a processing of the features.

6. The computer-implemented method of claim 5, wherein determining the clusters comprises:
using at least one of k-means, hierarchical clustering or DBSCAN; or
determining communities of nodes of combined graph representations based on their similarities or connections, optionally wherein determining communities of nodes comprises merging nodes into communities based on modularity gain by the Louvain algorithm

7. The computer-implemented method of claim 5, wherein determining the features from the combined graph representations comprises:
determining graph embeddings of nodes and edges which are numerical values in a lower-dimensional space compared to original values, optionally wherein determining graph embeddings comprises using Node2Vec; or
determining adjacency matrices and/or attribute matrices.

8. The computer-implemented method of any preceding claim, wherein the elements assigned to the nodes and the edges that are categorical values or labels are converted into numerical representations by using at least one of the following techniques: one-hot encoding, label embedding or ordinal encoding.

9. The computer-implemented method of any preceding claim, wherein the raw data is associated with a time slot.

10. The computer-implemented method of any preceding claim, wherein all of the processes identified in the raw data are terminated.

11. The computer-implemented method of any preceding claim, further comprising labelling an event classified as a malicious event by the at least one classification model.

12. The computer-implemented method of any preceding claim, wherein several classification models are used, and a majority vote is used to classify the event as a malicious event or a non-malicious event.

13. The computer-implemented method of any preceding claim, wherein the combined graph representation has a depth equal to N, the depth being related to a number of identified processes in the raw data that are linked together, N being an integer greater or equal to two.

14. A computer program which, when executed, causes an electronic device to perform the method of any preceding claim for operations for classifying events from a raw data associated with a device, an event being associated with at least two processes executed on the device, the event being either a malicious event or a non-malicious event

15. A computer-implemented system, comprising:
one or more computers; and
one or more computer memory devices interoperably coupled with the one or more computers and having tangible, non-transitory, machine-readable media storing one or more instructions that, when executed by the one or more computers, perform the method of any one of claims 1 to 13.
